# EUROPEAN PATENT SPECIFICATION

(11) **EP 1 908 247 B1**
(45) Date of publication and mention of the grant of the patent: **14.09.2016**
(21) Application number: 06761164.0
(22) Date of filing: 21.07.2006
(51) Int. Cl.: H04L 29/02, H04L 12/16

(54) **A METHOD OF CONTROLLING DELIVERY OF MULTI-PART CONTENT FROM AN ORIGIN SERVER TO A MOBILE DEVICE BROWSER VIA A SERVER**
VERFAHREN ZUR STEUERUNG DER ABLIEFERUNG VON MEHRTEILIGEM INHALT VON EINEM URSPRUNGSSERVER ZU EINEM MOBILEINRICHTUNGS-BROWSER ÜBER EINEN SERVER
COMMANDE DE TRANSMISSION D'UN CONTENU EN PLUSIEURS PARTIES DEPUIS UN SERVEUR D'ORIGINE A UN NAVIGATEUR POUR DISPOSITIF MOBILE VIA UN SERVEUR MANDATAIRE

(30) Priority: 22.07.2005 CA 2513014
(43) Date of publication of application: 09.04.2008
(73) Proprietor: BlackBerry Limited, Waterloo, ON N2K 0A7 (CA)
(72) Inventor: KNOWLES, Michael, Waterloo, Ontario N2T 2X5 (CA); TAPUSKA, David, Waterloo, Ontario N2T 2T7 (CA); KALOUGINA, Tatiana, Waterloo, Ontario N2L 5H3 (CA)
(74) Representative: MERH-IP Matias Erny Reichl Hoffmann Patentanwälte PartG mbB
(86) International application number: PCT/CA2006/001203
(87) International publication number: WO 2007/009255

(56) References cited:
- WO-A1-00/68824
- CA-A1- 2 379 082
- CA-A1- 2 432 590
- US-A- 5 864 837
- US-A- 5 946 697
- US-A1- 2002 004 813
- US-A1- 2004 010 543
- US-A1- 2004 172 535
- US-A1- 2004 215 665
- US-A1- 2005 117 558
- US-A1- 2005 125 533
- US-A1- 2005 138 176
- JESSE ANTON ET AL: "WEB CACHING FOR DATABASE APPLICATIONS WITH ORACLE WEB CACHE" ACM PROCEEDINGS OF SIGMOD. INTERNATIONAL CONFERENCE ON MANAGEMENT OF DATA, XX, XX, 4 June 2002 (2002-06-04), pages 594-599, XP001152240 ISBN: 978-1-58113-497-1

## Description

### Field

This specification relates generally to mobile data communication systems, and more particularly to a method for controlling the delivery of multi-part content from an origin server to a mobile Internet browser via a proxy server.

### Background

Mobile communication devices are becoming increasingly popular for business and personal use due to a relatively recent increase in number of services and features that the devices and mobile infrastructures support. Handheld mobile communication devices, sometimes referred to as mobile stations, are essentially portable computers having wireless capability, and come in various forms. These include Personal Digital Assistants (PDAs), cellular phones and smart phones.

It is known in the art to provide Internet browser functionality in such mobile communication devices. In operation, a browser user-agent in the handheld mobile communication device issues commands to an enterprise or proxy server implementing a Mobile Data Service (MDS), which functions as an acceleration server for browsing the Internet and transmitting text and images to the mobile device for display. Such enterprise or proxy servers generally do not store the state of their clients (i.e. the browser user-agent), or if they do, the state that is stored is minimal and limited to HTTP state (i.e. cookies). Typically, such enterprise or proxy servers fetch and transmit data to the browser user-agent when the browser makes a data request. In order to improve the performance of the browser on the mobile device, some enterprise or proxy servers fetch all the data required in order to fulfill the data request from the browser, aggregate the fetched data, and transmit the data to the device browser. For instance, if a HyperText Markup Language (HTML) page is requested, the enterprise or proxy server fetches any additional files referenced within the HTML page (e.g. Images, inline CSS code, JavaScript, etc.). Since the proxy server fetches all the additional files within the HTML file, the device does not have to make additional data requests to retrieve these additional files. Although this methodology is faster than having the device make multiple requests, the proxy server nonetheless has to send all of the data again if the site is later revisited. This is because the proxy server has no knowledge of the device caches (e.g. caches that are saved in persistent memory, for different types of data such as a content cache to store raw data that is cached as a result of normal browser activity, a channel cache containing data that is sent to the device by a channel or cache push, and a cookie cache containing cookies that are assigned to the browser by visited Web pages). For example, if a user browses to CNN.com, closes the browser to perform some other function (e.g. place a telephone call or access e-mail messages, etc.) and then later accesses the CNN.com Web site (or follows a link from CNN.com to a news story), the banner "CNN.com" will be transmitted from the MDS to the device browser each time the site is accessed, thereby consuming significant bandwidth, introducing delay, etc.

It is known in the art to provide local file caching. One approach is set forth in GloMop: Global Mobile Computing By Proxy, published September 13, 1995, by the GloMop Group, wherein PC Card hard drives are used as portable file caches for storing, as an example, all of the users' email and Web caches. The user synchronizes the file caches and the proxy server keeps track of the contents. Mobile applications (clients) are able to check the file caches before asking for information from the proxy server by having the server verify that the local version of a given file is current.

US 5,946,697 describes a method of transferring HTML files over a network.

### Summary

In general, there is provided a method of controlling delivery of multi-part content from an origin server to a mobile device browser via a proxy server. The method includes: transmitting state information regarding the mobile device browser either in an original document request from the mobile device browser to the proxy server, or at the beginning of a browsing session between the mobile device browser and proxy server and updated throughout the browsing session, via an out-band protocol; retrieving data from the origin server to the proxy server responsive to the request from the mobile device browser; and creating a multi-part document for transmission to the mobile device browser, the multi-part document containing images and other auxiliary files optionally related to the original request, to be displayed on the device, and data in the form of compressed versions of requested portions of the document along with response codes and headers for indicating portions of the document already cached in the mobile device browser and information for indicating portions of the document not yet cached in the mobile device browser.

A specific application of this method provides for communicating information between an enterprise or proxy server and a mobile Internet device browser. An HTTP-like protocol is set forth, referred to herein as the Browser Session Management (BSM) protocol, for providing a control channel between the proxy server, and the mobile device browser, so that the mobile device browser can communicate to the proxy server what data the mobile device browser has stored in memory (from previous browsing). The BSM protocol is an "out of band" protocol in that BSM communications are in addition to the usual stream of HTTP requests from the mobile device browser to the proxy server and provide "metadata" relating to cache contents. This metadata is used by the proxy server when handling subsequent requests from the mobile device browser, to determine what data to send to the mobile device browser, thereby significantly reducing data transfer on subsequent requests relative to the prior art methodology discussed above.

Because the proxy server is aware of what the mobile communication device has stored in its cache, the amount of data sent to the mobile communication device may be reduced, thereby increasing the performance of the mobile communication device and reducing operational cost. If after the first request the CNN.com banner is cached and provided the proxy server "knows" that the information has been cached, then there will be no need to send the CNN.com banner to the mobile device browser upon subsequent visits to the CNN Web site.

According to another aspect, messages from the device to the proxy server contain hash values of different portions of documents (rather than the actual URLs) which are used by the proxy server to detect state changes in the device and utilize the information in preparing documents for transmission to the device. In another embodiment, the device sends hashes of the actual data of the portions (i.e. the actual image data, JavaScripts, StyleSheets, etc.) and the proxy server compares the received and stored data hashes for the portions to determine if the device already has the data for a particular portion (e.g. previously retrieved with a different URL), in which case the proxy server sends a response to the device with a header that indicates the device already has the data that is to be used for that portion. A person of skill in the art will appreciate that a one-way hash function transforms data into a value of fixed length (hash value) that represents the original data. Ideally, the hash function is constructed so that two sets of data will rarely generate the same hash value. Examples of known hash functions include MD2, MD5 and SHA-1.

In contrast to the prior art *GloMop* caching methodology discussed above, the exemplary method set forth herein synchronizes the cache contents when the mobile device browser connects to the proxy server in order to initiate a session and keeps track of changes to the cache via knowledge of what data has been sent to the mobile device browser in combination with state information periodically received from the mobile device browser identifying what has actually been cached. Also, as set forth in greater detail below, the proxy server uses this cache knowledge to determine what to send back to the mobile device browser. In contrast, the prior art *GloMop* methodology does not contemplate sending any state information to the proxy server for identifying what has actually been cached in the device. Moreover, the prior art *GloMop* approach first checks the local cache, and then queries the proxy server to determine whether a particular data item in the cache is current or not. According to the *GloMop* prior art, the proxy server does not use its own knowledge of the mobile device browser cache to determine what to send back to the mobile device browser.

The invention is defined according to the method of claim 1 and the system of claim 12.

Additional aspects and advantages will be apparent to a person of ordinary skill in the art, residing in the details of construction and operation as more fully hereinafter described and claimed, reference being had to the accompanying drawings.

### Brief Description of the Drawings

A detailed description of the preferred embodiment is set forth in detail below, with reference to the following drawings, in which:
Figure 1 is a block diagram of a communication system for implementing Internet browsing functionality in a mobile communication device;
Figure 2A shows communication protocol stacks for the communication system of Figure 1;
Figure 2B shows communication protocol stacks for a Browser Session Management (BSM) protocol according to an exemplary embodiment;
Figure 3 is a flowchart showing the method for communicating information between a proxy server and a mobile Internet browser, according to the preferred embodiment; and
Figure 4 is a flowchart of an exemplary method according to the present specification.

### Detailed Description

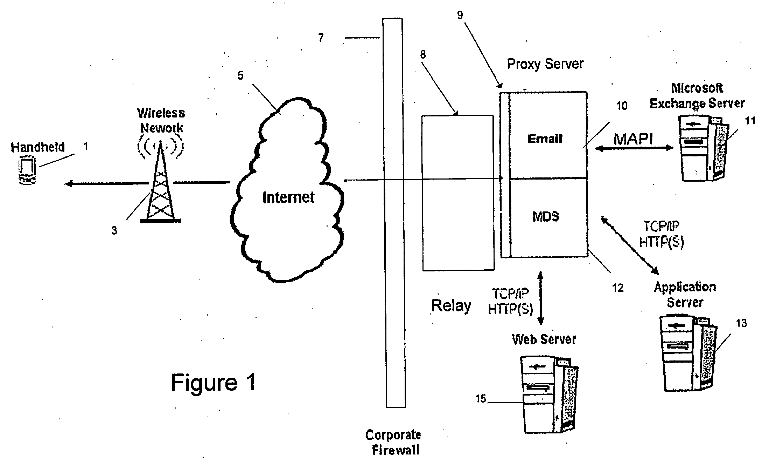

Figure 1 depicts the architecture of a system for providing wireless e-mail and data communication between a mobile device 1 and an enterprise or proxy server 9. Communication with the device 1 is effected over a wireless network 3, which in turn is connected to the Internet 5 and proxy server 9 through corporate firewall 7 and relay 8. Alternatively, the device 1 can connect directly (via the Internet) through the corporate firewall 7 to the proxy server 9. When a new message is received in a user's mailbox within email server 11, enterprise or proxy server 9 is notified of the new message and email application 10 (e.g. Messaging Application Programming Interface (MAPI), MS Exchange, etc.) copies the message out to the device 1 using a push-based operation. Alternatively, an exemplary architecture for proxy server 9 may provide a browsing proxy but no email application 10. Indeed, the exemplary embodiment set forth herein relates to mobile browser device functionality and is not related to email functionality. Proxy server 9 also provides access to data on an application server 13 and the Web server 15 via a Mobile Data Service (MDS) 12. Additional details regarding e-mail messaging, MAPI sessions, attachment service, etc., are omitted from this description as they are not germane. Nonetheless, such details would be known to persons of ordinary skill in the art.

In terms of Web browsing functionality, the device 1 communicates with enterprise or proxy server 9 using HTTP over an IP protocol optimized for mobile environments. In some embodiments, the device 1 communicates with the proxy server 9 using HTTP over TCP/IP, over a variant of TCP/IP optimized for mobile use (e.g. Wireless Profiled TCP), or over other, proprietary protocols. For example, according to the communications protocol of Fgure 2A, HTTP is run over Internet Point-to-Point Protocol (IPPP) and an encrypted Global Messaging Exchange (GME) channel over which datagrams are exchanged to transport data between the device 1 and proxy server 9. The GME datagrams are 64Kbit in size whereas the wireless network 3 can only transport UDP datagrams with payloads up to 1500 bytes. Therefore, a Message Delivery Protocol (MDP) is used to separate the GME datagrams into one or more MDP packets, each of which is less than 1500 bytes (default size 1300 bytes), which are transported over UDP/IP to and from the relay 8 which, in turn communicates with the proxy server 9 via Server Relay Protocol (SRP)/TCP/IP. The MDP protocol includes acknowledgements, timeouts and re-sends to ensure that all packets of the GME datagram are received.

The communication between the device 1 and proxy server 9 is optionally encrypted with an encryption scheme, such as Triple Data Encryption Algorithm (TDEA, formerly referred to as Triple Data Encryption Standard (Triple DES)), as is known in the art. The proxy server 9 enables Internet access, preprocesses and compresses HTML and XML content from the Web server 15 before sending it to the device 1, transcodes content type, stores HTTP cookies on behalf of the device 1, and supports certificate authority authentications, etc.

In response to a request from the device browser, the proxy server 9 retrieves content from Web server 15 and creates a custom document containing both images to be displayed on the device and data in the form of compressed versions of requested portions of the document. The document is preferably of "multi-part" format to improve transmission to and processing efficiency within the device 1. Specifically, in order to display composite Web pages (i.e. pages composed of a main WML or HTML page and one or more related auxiliary files, such as style sheets, JavaScript files, or image files) the device browser is normally required to send multiple HTTP requests to the proxy server 9. However, according to the multi-part generation feature, the proxy server 9 posts all necessary parts of a composite Web page in a single bundle, enabling the browser to download all the required content with a single request. The header in the server response identifies the content as a multi-part bundle (e.g. Multi-Purpose Mail Extensions (MIME)/multipart, as defined by RFC 2112, E. Levinson, March 1997).

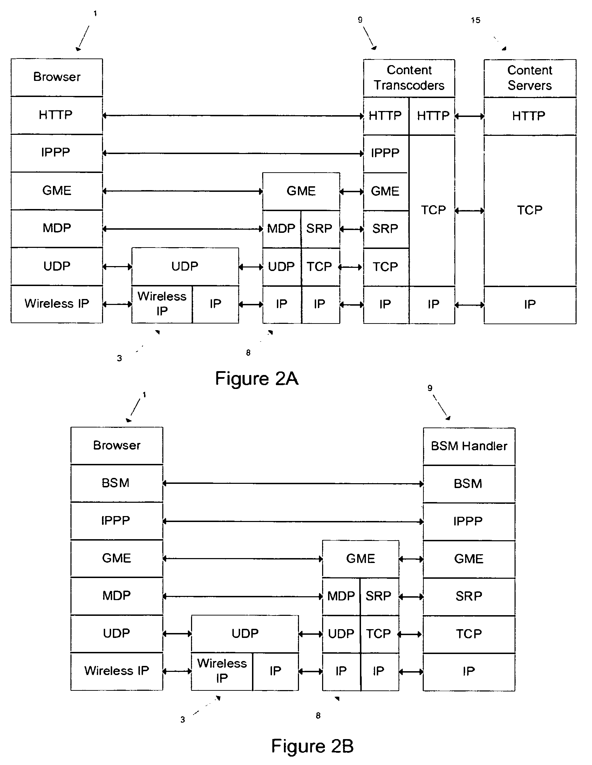

In order to indicate device browser state information to the proxy server 9, three transitional state messages are defined herein, as follows: CONNECT, UPDATE and DISCONNECT, each of which conforms to the exemplary BSM protocol. As shown in Figure 2B, the BSM communications protocol is identical to the protocol of Figure 2A except that the conventional HTTP layer of the protocol stack is replaced by an HTTP-like BSM layer.

The CONNECT transitional message creates a new session with a connection identifier carried in the payload, device information and state data (e.g. current cache and device information) in the form of a set of hash functions for use by the proxy server 9 in preparing a response. Specific care is taken not to identify to the proxy server 9 what cookies or cache entries are contained on the device 1. Only hash values of the state data are sent to the proxy server 9 in order to protect the identity of state data on the device 1.

The CONNECT message also contains a unique authentication key for generating a MAC (Message Authentication Code) using a Hash Message Authentication Code (HMAC) algorithm that incorporates a cryptographic hash function in combination with the authentication key. Each portion of a multi-part document from the proxy server 9 also contains an HMAC, generated using the authentication key, that is used for authenticating the proxy server 9 before adding that portion to the device cache. This prevents a third party from creating its own multi-part document and sending it to the device 1 for injecting cache entries that could be used to extract personal information from the user.

Upon receipt of the CONNECT message, the proxy server 9 uses the state information to regulate or control the transmission of content retrieved from Web server 15 (step 23) to the device 1. One example of an application where this information can be used is when the proxy server 9 is pre-fetching images, inline Cascading Style Sheets (CSS), JavaScript, and the like for an HTML document. If the proxy server 9 already knows that the device 1 has the image, inline CSS, or JavaScript document, there is no need for resending the documents.

The UPDATE transition message notifies the proxy server 9 of changes that have occurred on the device 1 since the last CONNECT message or the last UPDATE message, between the device 1 and proxy server 9 (e.g. new cache entries added because of a push, or invoking the "Low Memory Manager" (LMM) or other memory-space preservation policies on the device and purging items from the cache).

The DISCONNECT transition message notifies the proxy server 9 that the device 1 will no longer send any more messages using the connection identifier specified in the payload. The proxy server 9 can then de-allocate any memory reserved for the connect session between the device 1 and proxy server 9. Upon receiving the disconnect message, the proxy server 9 deletes any session cookies for the device 1 (if it is processing cookies) along with state information. Receiving a request on the identified connection after the DISCONNECT has been received, and before any subsequent CONNECT message has been received, is defined as an error.

Since state is indicated from the device 1 to the proxy server 9, and state may be stored in transient memory within proxy server 9, a mechanism is provided for the proxy server 9 to return to the device 1 a message indicating that the session the device is trying to use is not valid. Once this occurs, the device 1 issues a new CONNECT message and establishes a new session with the proxy server 9, and re-issues the original request.

The data protocol set forth herein is similar to HTTP in order to reduce complexity and to reuse code that already exists for the HTTP protocol. Thus, data transmission according to this protocol begins with a STATE keyword; followed by a BSM (Browser Session Management) protocol identifier and a "Content-Length" header. The end of the "headers" is indicated by a double CRLF (a sequence of control characters consisting of a carriage return (CR) and a line feed (LF)), much like HTTP. After the double CRLF pair (i.e. \r\n) a WBXML (WAP Binary Extensible Markup Language) encoded document is inserted as the message payload. The WBXML document is later decoded using a DTD (Document Type Definition) and codebook, as discussed in greater detail below. The indication of the protocol version refers to what version of the DTD to validate the request against (ie. BSM/1.1 stipulates using version 1.1 of the DTD). It should be noted that WBXML encoding of the contents of BSM messages is set forth to allow for more efficient processing of the BSM message at the device 1, but that in alternate embodiments, the BSM message may be formatted as normal (textual) XML.

The following is an example communication using the protocol according to the preferred embodiment:
CONNECT BSM/1.0\r\n
Content-Length: 40\r\n
\r\n
<WBXML Encoded document of length 40 bytes>
BSM/1.0 200\r\n
r\n

In the foregoing, the first four lines form the CONNECT message from the device 1 to the proxy server 9, and the last two lines are the response from the proxy server 9.

An exemplary XML document, is as follows:

```
 <?xml version="1.0"?>
 <!DOCTYPE bsm PUBLIC "-// DTD BSM 1.0//EN"
          "http://www.something.com/go/mobile/BSM/bsm_1.0.xml">
          <bsm id="2" hmac="12345678901234567890">
          <cache>
          <size>123012</size>
          <entry urlHash="FEEDDEED01" dataHash="FDDEDEED11" etag="SomeEtag"
          expiry="256712323"/>
          </cache>
          <device>
          <version>4.0.1.123</version>
          <memfree>12342342</memfree>
          </device>
          </bsm>
```

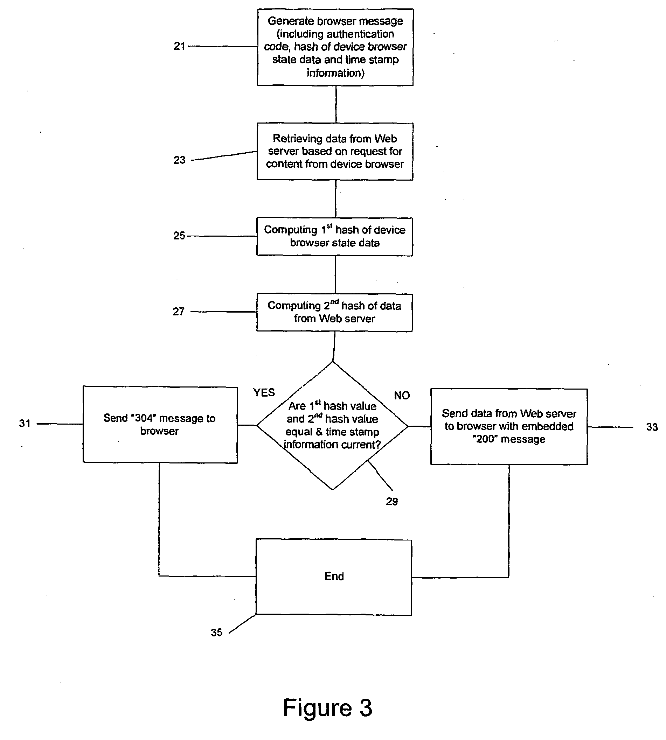

In the example, the state data includes the URL of an HTML page within the device cache. It will be noted that the XML document payload includes a connection identifier (i.e. bsm id="2"), a value indicating when the document was last modified (i.e. etag="SomeEtag"), a page expiry (i.e. expiry="256712323"), and hash values for a URL (i.e. entry urlHash="FEEDDEED01") and a data attribute (i.e. entry dataHash="FDDEDEED11") rather than transmitting the actual URL and data attribute themselves. Thus, as shown in Figure 3, the hashes of the URL and data attribute of the cached page are sent to the proxy server 9 in the CONNECT string (step 21). The proxy server 9 then fetches the requested page from Web server 13 (step 23), computes hashes of device browser state data (step 25) and data from the Web server 13 (step 27), and compares the hashes of the URL and data attribute of the requested page with the hashed URL and data attribute of the cached page, and also compares the time stamps/expiration information (step 29) in order to determine whether the cached page is current. Specifically, in response to the proxy server 9 retrieving a portion from the Web server 13, it computes the dataHash and urlHash of that portion and performs a comparison to the dataHashes and urlHashes of the entries it has saved. There are three cases.

In the first case, if both the dataHash and the urlHash of the retrieved portion match the dataHash and urlHash of a cache entry that the proxy server 9 knows the device 1 has, then the server 13 simply omits this portion from the response, as the device 1 still has a valid entry in its cache.

In the second case, if the dataHash of the retrieved portion matches the dataHash of a cache entry that the proxy server 9 knows the device 1 has, but the urlHash of the retrieved portion does not match the urlHash of that cache entry, the server 13 inlines this updated portion in the combined response to the device 1. However, because the dataHash matches a dataHash of an entry that already exists on the device 1, the inlined response does not include the actual data, but instead only includes a new HTTP header whose value is the new dataHash. When the device 1 receives this inlined portion, it detects the special header, looks for the cache entry with that dataHash, and either creates or updates its cache entry for that URL with the data corresponding to the dataHash by copying that data from the other cache entry (the cache for device 1 is modified to have two indexes, one to retrieve cache entries by URL, the other to retrieve cache entries by dataHash). Finally, if the proxy server 9 already has a cache entry for the urlHash, it updates that entry with the new dataHash; otherwise it creates a new entry for this portion.

In the third case, if the dataHash of the retrieved portion does not match the dataHash of any of the cache entries that the proxy server 9 has received from the device 1 in the BSM messages, then the server inlines the entire portion (headers and new data), since this portion has been updated and the device 1 does not contain the updated value anywhere in its cache.

Although not indicated in Figure 3, it will be appreciated that each inline part to be added to a document to be displayed at the device 1 is fetched. If the response code from the proxy server indicates a "304" (step 31), then the part (i.e., the "304" response) is written as a block in the multipart document. On the other hand, if the proxy server 9 returns a "200" (step 33), then the hash compare operation is performed, and the portion is only included in the multipart document if the hash compare function indicates it is not already on the device 1.

An exemplary DTD, according to the preferred embodiment, is as follows:

```
 <!ELEMENT bsm (cache?, device)>
 <!ATTLIST bsm
          id NMTOKEN #REQUIRED
          >
          <!ELEMENT cache (size, (entry)+)>
          <!ATTLIST cache
         action (add|remove|remove_all|quick_add) "add"
         >
         <!ELEMENT entry EMPTY>
         <!ATTLIST entry
          urlHash CDATA #REQUIRED
         dataHash CDATA #REQUIRED
         etag CDATA #IMPLIED
         expiry NMTOKEN #IMPLIED
         size NMTOKEN #IMPLIED
          last-modified NMTOKEN #IMPLIED
          >
          <!ELEMENT size (#PCDATA)>
          <!ELEMENT device (version, memfree)>
          <!ELEMENT version (#PCDATA)>
          <!ELEMENT memfree (#PCDATA)>
          <!ELEMENT hmac (#PCDATA)>
          Element/Code
          HMAC 12
          Attribute/Code
          size 9 (instead of action)
          lastModified 10
          actionAdd 11
          actionRemove 12
          actionRemoveAll 13
          actionQuickAdd 14
```

**Finally, an exemplary codebook, is as follows:**

| **Element** | **Code** |
|---|---|
| Session | 5 |
| Cache | 6 |
| Size | 7 |
| Entry | 8 |
| Device | 9 |
| Version | 10 |
| MemFree | 11 |
| HMAC | 12 |

| **Attribute** | **Code** |
|---|---|
| Id | 5 |
| UrlHash | 6 |
| dataHash | 7 |
| ETag | 8 |
| Expiry | 9 |
| Action | 10 |

As is well known in the art, the codebook is used as a transformation for compressing the XML document to WBXML, wherein each text token is represented by a single byte from the codebook.

As discussed above, the proxy server 9 transmits multi-part documents in a proprietary format of compressed HTML, interspersed with data for images and other auxiliary files (which may or may not be related to the main HTML Web page). However, in a departure from conventional HTML, each document part may also include a response code (e.g. "200" for OK, or "304" for "not modified" to indicate that the specified document part has already been cached in the device 1). This may be used for selective downloading of document parts rather than entire documents and for indicating when a part (e.g. image) is about to expire. This is useful, for example, when one Web page links to another page containing one or more common elements.

Of course, certain device requests (e.g. page refresh) will always result in a full document download, irrespective of device state information stored in the proxy server 9.

It is contemplated that the inclusion of response codes may be used by heuristic processes within the proxy server 9 to learn user behaviour and modify downloading of documents based on tracking the history of certain changes reflected in the hash value (e.g. the server 9 may learn to download a certain page (e.g. CNN news) at a particular time each day based the user's history of issuing requests for that page at regular times. As discussed above, because the downloaded documents are multi-part and contain embedded response codes, only those portions of the document that have changed are actually downloaded.

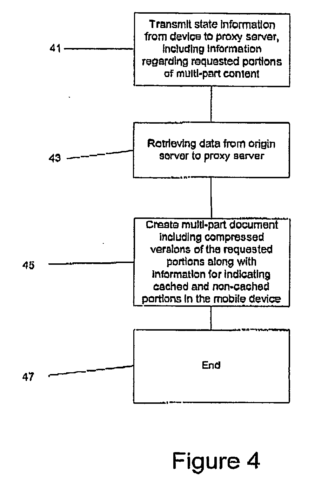

Figure 4 illustrates a broad aspect of the exemplary method of controlling delivery of multi-part content from an origin server, such as Web server 15, to the mobile device 1 via proxy server 9. At step 41, state information is transmitted from the mobile device 1, including information regarding requested portions of the multi-part content. Data is retrieved at step 43, from the origin or Web server 15 to the proxy server 9. A multi-part document is created (step 45) within proxy server 9 for transmission to the mobile device 1, where the multi-part document includes compressed versions of the requested portions along with information for indicating portions already cached in the mobile device 1 and portions not yet cached in said the device 1. The method then ends (step 47).

As indicated above, the protocol of the preferred embodiment is preferably carried over a proprietary IPPP transport layer, but can also be easily adapted to run over TCP/IP on a specific port. The protocol is preferably implemented as a handler in the proxy server 9, thereby simplifying any currently existing protocol. (e.g. to avoid overloading a current HTTP protocol).

A person skilled in the art, having read this description of the preferred embodiment, may conceive of variations and alternative embodiments. For example, the conditional transfer of data based on communication of state information, as set forth above, may also be applied to separately transmitting individual portions of the multipart document as opposed to transmitting the entire document at once.

In some embodiments, the proxy server 9 uses heuristic algorithms to learn what additional data requests the device may make based on knowledge of the current request, and knowledge of past activity. In some instances, the device may follow a pattern of requesting a first Web page, and then a second Web page. For example, the device may first request the "cnn.com" Web page, and then request the "cnn.com/news" Web page. The proxy server 9 learns this pattern, and whenever the device requests the first Web page, the proxy server 9 determines that the device is likely to then request the second Web page. The proxy server 9 then fetches the second Web page, and uses its knowledge of the data cached on the device 1 (i.e. from the state information transferred to the proxy server 9 during initiation of the present connection) to determine whether the second Web page already exists within the data cached on the device. If so, the proxy server 9 includes information about the second Web page via response codes embedded within the response provided for the first Web page. If the device 1 requires the second Web page, then the device 1 can reference its cache and can avoid having to make a request to the proxy server 9 for the second Web page.

In other embodiments, heuristic processes within the proxy server 9 learn user behaviour and modify downloading of documents based on tracking the history of certain changes reflected in the hash value (e.g. the proxy server 9 may learn to download a certain page (e.g. CNN news) at a particular time each day based the user's history of issuing requests for that page at regular times). As discussed, because the downloaded documents are multi-part and contain embedded response codes, only those portions of the document that have changed are actually downloaded.

All such variations and alternative embodiments are believed to be within the ambit of the claims appended hereto.

## Claims

1. A method of controlling delivery of multi-part content from an origin server to a mobile device browser via a proxy server, comprising:
receiving at the proxy server state information from the mobile device browser including information regarding requested portions of said multi-part content, the state information comprising hash values for the requested portions of said multi-part content, the state information comprising a hash value for a URL of a requested portion that is cached in the mobile device browser and a hash value of data of the requested portion that is cached in the mobile device browser;
retrieving data from said origin server to said proxy server;
generating a hash value for a URL of a retrieved portion and a hash value of data of the retrieved portion;
comparing the hashes of the URL and the data of the retrieved portion to the hashes of the URL and the data of the requested portion that is cached in the mobile device browser respectively; and
creating a multi-part document for transmission to said mobile device browser, said multi-part document including compressed versions of said requested portions along with information for indicating portions already cached in said mobile device browser and information for indicating portions not yet cached in said mobile device browser.

2. The method of claim 1, further comprising:
generating at least one first hash value for each said portion cached in said mobile device browser;
transmitting each said first hash value to said proxy server within said state information;
generating at least one second hash value for each corresponding portion created within said proxy server from said data retrieved from said origin server;
comparing each said first hash value to each said second hash value and, in the event said first and second hash values are the same, then transmitting said information for indicating portions already cached in said mobile device browser, and in the event said the first and second hash values are different, then transmitting said information for indicating portions not yet cached in said mobile device browser.

3. The method of claim 2, wherein each said information for indicating said portions already cached in said mobile device browser and said information for indicating portions not yet cached in said mobile device browser is included in a response code from said proxy server to said mobile device browser.

4. The method of claim 1, wherein said multi-part document includes at least two of:
a main Web page, style sheet, JavaScript file and image file.

5. The method of claim 1, wherein said state information includes a key for generating a first Message Authentication Code (MAC), and each of said requested portions contain a second Message Authentication Code (MAC) for authenticating said multi-part document to said mobile device browser.

6. The method of claim 2, wherein said state information includes said at least one first hash value and a connection identifier, for notifying the proxy server of current state information for a current session between said browser and the proxy server.

7. The method of claim 6, wherein said state information includes a message for notifying the proxy server of changes in state subsequent to said current session between said browser and the proxy server.

8. The method of claim 6, wherein said state information includes a message for notifying the proxy server that the browser has ceased sending messages using said connection identifier.

9. The method of claim 8, wherein the proxy server de-allocates stored memory for the session in response to being notified that the browser has ceased sending messages using said connection identifier.

10. The method of claim 1, wherein said state information is transmitted in one of either an original document request from the mobile device browser to the proxy server, and upon commencement of a browsing session between the mobile device browser and proxy server and periodically updated throughout the browsing session.

11. The method of claim 10, wherein said browsing session conforms to an out-of-band communication protocol.

12. A system of controlling delivery of multi-part content from an origin server to a mobile device browser via a proxy server, comprising:
means for receiving state information from the mobile device browser including information regarding requested portions of said multi-part content, the state information comprising hash values for the requested portions of said multi-part content, the state information comprising a hash value for a URL of a requested portion that is cached in the mobile device browser and a hash value of data of the requested portion that is cached in the mobile device browser;
means for retrieving data from said origin server to said proxy server;
means for generating a hash value for a URL of a retrieved portion and a hash value of data of the retrieved portion;
means for comparing the hashes of the URL and the data of the retrieved portion to the hashes of the URL and the data of the requested portion that is cached in the mobile device browser respectively; and
means for creating a multi-part document for transmission to said mobile device browser, said multi-part document including compressed versions of said requested portions along with information for indicating portions already cached in said mobile device browser and portions not yet cached in said mobile device browser.

## Patentansprüche

1. Ein Verfahren zum Steuern einer Lieferung von Multiteil-Inhalt von einem Ursprungsserver an einen Browser einer mobilen Vorrichtung mittels eines Proxyservers, umfassend:
Erhalten, an dem Proxyserver, von Zustandsinformationen von dem Browser der mobilen Vorrichtung, die Information aufweist hinsichtlich angeforderten Teilen des Multiteil-Inhalts, wobei die Zustandsinformationen Hash-Werte für die angeforderten Teile des Multiteil-Inhalts umfasst, wobei die Zustandsinformation einen Hash-Wert für eine URL eines angeforderten Teils umfasst, der in dem Browser der mobilen Vorrichtung gecashed ist, und einen Hash-Wert von Daten des angeforderten Teils, der in dem Browser der mobilen Vorrichtung gecashed ist;
Abrufen von Daten von dem Ursprungsserver zu dem ProxyServer;
Erzeugen eines Hash-Werts für eine URL eines abgerufenen Teils und eines Hash-Werts von Daten des abgerufenen Teils;
Vergleichen der Hashs der URL und der Daten des abgerufenen Teils mit den jeweiligen Hashs der URL und der Daten des angeforderten Teils, der in dem Browser der mobilen Vorrichtung gecashed ist; und
Erzeugen eines Multiteil-Dokuments zur Übertragung an den Browser der mobilen Vorrichtung, wobei das Multiteil-Dokument komprimierte Versionen der angeforderten Teile zusammen mit Information zum Angeben von bereits in dem Browser der mobilen Vorrichtung gecashten Teilen aufweist und Information zum Angeben von Teilen, die noch nicht in dem Browser der mobilen Vorrichtung gecashed sind.

2. Das Verfahren nach Anspruch 1, ferner umfassend:
Erzeugen von zumindest einem ersten Hash-Wert für jeden Teil, der in dem Browser der mobilen Vorrichtung gecashed ist;
Übertragen jedes ersten Hash-Werts an den Proxyserver in der Zustandsiriformation;
Erzeugen eines zumindest zweiten Hash-Werts für jeden korrespondierenden Teil, der in dem Proxyserver von den Daten erzeugt wurde, die von dem Ursprungsserver abgerufen wurden;
Vergleichen jedes ersten Hash-Werts mit jedem zweiten Hash-Wert, und für den Fall, dass die ersten und zweiten Hash-Werte dieselben sind, Übertragen der Information zum Angeben von Teilen, die schon in dem Browser der mobilen Vorrichtung gecashed sind, und für den Fall, dass die ersten und zweiten Hash-Werte verschieden sind, Übertragen der Information zum Angeben von Teilen, die noch nicht in dem Browser der mobilen Vorrichtung gecashed sind.

3. Das Verfahren nach Anspruch 2, wobei jede der Information zum Angeben der Teile, die schon in dem Browser der mobilen Vorrichtung gecashed sind und der Information zum Angeben von Teilen, die noch nicht in dem Browser der mobilen Vorrichtung gecashed sind, in einem Antwortcode von dem Proxyserver an den Browser der mobilen Vorrichtung enthalten ist.

4. Das Verfahren nach Anspruch 1, wobei das Multiteil-Dokument zumindest zwei enthält aus:
einer Hauptwebseite, Stylesheet, JavaScript-Datei und Bilddatei.

5. Das Verfahren nach Anspruch 1, wobei die Zustandsinformation einen Schlüssel aufweist zum Erzeugen eines ersten Nachrichtenauthentifizierungscodes (MAC), und wobei jeder der angeforderten Teile einen zweiten Nachrichtenauthentifizierungscode (MAC) zum Authentifizieren des Multiteil-Dokuments an den Browser der mobilen Vorrichtung enthält.

6. Das Verfahren nach Anspruch 2, wobei die Zustandsinformation den zumindest einen ersten Hash-Wert und einen Verbindungsidentifikator enthält zum Benachrichtigen des Proxyservers über aktuelle Zustandsinformation für eine aktuelle Sitzung zwischen dem Browser und dem Proxyserver.

7. Das Verfahren nach Anspruch 6, wobei die Zustandsinformation eine Nachricht enthält zum Benachrichtigen des Proxyservers über Zustandsänderungen nachfolgend auf die aktuelle Sitzung zwischen dem Browser und dem Proxyserver.

8. Das Verfahren nach Anspruch 6, wobei die Zustandsinformation eine Nachricht zum Benachrichtigen des Proxyservers enthält, dass der Browser aufgehört hat, Nachrichten zu senden unter Benutzung des Verbindungsidentifikators.

9. Das Verfahren nach Anspruch 8, wobei der Proxyserver gespeicherte Daten für die Sitzung wiederzuordnet, in Antwort auf Benachrichtigung, dass der Browser aufgehört hat Nachrichten zu senden unter Benutzung des Verbindungsidentifikators.

10. Das Verfahren nach Anspruch 1, wobei die Zustandsinformation übertragen wird in einer Ursprungsdokument-Anfrage von dem Browser der mobilen Vorrichtung an den Proxyserver, und bei Beginn einer Browsing-Sitzung zwischen dem Browser der mobilen Vorrichtung und dem Proxyserver, und periodisch aktualisiert wird während der Browsing-Sitzung.

11. Das Verfahren nach Anspruch 10, wobei die Browsing-Sitzung einem Outof-Bandkommunikationsprotokoll entspricht.

12. Ein System zum Steuern einer Lieferung von Multiteil-Inhalt von einem Ursprungsserver an einen Browser einer mobilen Vorrichtung mittels eines Proxyservers, umfassend:
Mittel zum Erhalten von Zustandsinformation von dem Browser der mobilen Vorrichtung, die Information aufweist hinsichtlich angeforderten Teilen des Multiteil-Inhalts, wobei die Zustandsinformation Hash-Werte für die angeforderten Teile des Multiteil-Inhalts umfasst, wobei die Zustandsinformation einen Hash-Wert für eine URL eines angeforderten Teils umfasst, der gecashed ist in dem Browser der mobilen Vorrichtung, und einen Hash-Wert der Daten des angeforderten Teils, der in dem Browser der mobilen Vorrichtung gecashed ist;
Mittel zum Abrufen von Daten von dem Ursprungsserver an den Proxyserver;
Mittel zum Erzeugen eines Hash-Werts für eine URL eines abgerufenen Teils und eines Hash-Werts von Daten des abgerufenen Teils;
Mittel zum Vergleichen der Hashs der URL und der Daten des abgerufenen Teils mit den jeweiligen Hashs der URL und der Daten des angeforderten Teils, der in dem Browser der mobilen Vorrichtung gecashed ist; und
Mittel zum Erzeugen eines Multiteil-Dokuments zum Übertragen an den Browser der mobilen Vorrichtung, wobei das Multiteil-Dokument komprimierte Versionen der angeforderten Teile zusammen mit Information zum Angeben von Teilen aufweist, die schon in dem Browser der mobilen Vorrichtung gecashed sind, und von Teilen, die noch nicht in dem Browser der mobilen Vorrichtung gecashed sind.

## Revendications

1. Procédé de commande de la remise d'un contenu en parties multiples entre un serveur d'origine et un navigateur de dispositif mobile, via un serveur mandataire, comprenant les étapes consistant à :
recevoir, sur le serveur mandataire, des informations d'état en provenance du navigateur de dispositif mobile comprenant des informations intéressant des parties demandées dudit contenu en parties multiples, les informations d'état comprenant des valeurs de hachage pour les parties demandées dudit contenu en parties multiples, les informations d'état comprenant une valeur de hachage pour une URL d'une partie demandée qui est mise en mémoire cache dans le navigateur de dispositif mobile et une valeur de hachage de données de la partie demandée qui est mise en mémoire cache dans le navigateur de dispositif mobile ;
obtenir des données dudit serveur d'origine par ledit serveur mandataire ;
produire une valeur de hachage pour une URL d'une partie obtenue et une valeur de hachage de données de la partie obtenue ;
comparer les hachages de l'URL et des données de la partie obtenue avec les hachages de l'URL et des données de la partie demandée qui sont mis en mémoire cache dans le navigateur de dispositif mobile, respectivement ; et
créer un document en parties multiples pour sa transmission vers ledit navigateur de dispositif mobile, ledit document en parties multiples comprenant des versions comprimées desdites parties demandées ainsi que des informations destinées à indiquer des parties déjà mises en mémoire cache dans ledit navigateur de dispositif mobile et des informations destinées à indiquer des parties qui ne sont pas encore mises en mémoire cache dans ledit navigateur de dispositif mobile.

2. Procédé selon la revendication 1, comprenant en outre les étapes consistant à :
produire au moins une première valeur de hachage pour chacune desdites parties mises en mémoire cache dans ledit navigateur de dispositif mobile ;
transmettre chacune desdites premières valeurs de hachage vers ledit serveur mandataire dans lesdites informations d'état ;
produire au moins une seconde valeur de hachage pour chaque partie correspondante créée dans ledit serveur mandataire à partir desdites données obtenues dudit serveur d'origine ;
comparer chacune des premières valeurs de hachage avec chacune des secondes valeurs de hachage et, si lesdites première et seconde valeurs de hachage sont identiques, transmettre lesdites informations destinées à indiquer des parties, déjà mises en mémoire cache dans ledit navigateur de dispositif mobile et, si lesdites première et seconde valeurs de hachage sont différentes, transmettre lesdites informations destinées à indiquer des parties qui ne sont pas encore mises en mémoire cache dans ledit navigateur de dispositif mobile.

3. Procédé selon la revendication 2, dans lequel chacune desdites informations destinées à indiquer lesdites parties déjà mises en mémoire cache dans ledit navigateur de dispositif mobile et lesdites informations destinées à indiquer des parties qui ne sont pas encore mises en mémoire cache dans ledit navigateur de dispositif mobile sont incluses dans un code de réponse envoyé par ledit serveur mandataire audit navigateur de dispositif mobile.

4. Procédé selon la revendication 1, dans lequel ledit document en parties multiples comprend au moins deux des fichiers suivantes : page web principale, feuille de style, fichier javascript et fichier d'image.

5. Procédé selon la revendication 1, dans lequel lesdites informations d'état comprennent une clef destinée à produire un premier code d'authentification de message (MAC), et chacune desdites parties demandées contient un second code d'identification de message (MAC) destiné à authentifier ledit document en parties multiples par ledit navigateur de dispositif mobile.

6. Procédé selon la revendication 2, dans lequel lesdites informations d'état comprennent ladite au moins une première valeur de hachage et un identificateur de connexion, afin de fournir au serveur mandataire des informations d'état courant pour une session courante entre ledit navigateur et le serveur mandataire.

7. Procédé selon la revendication 6, dans lequel lesdites informations d'état comprennent un message destiné à notifier le serveur mandataire des changements ultérieurs d'état touchant la session courante entre ledit navigateur et le serveur mandataire.

8. Procédé selon la revendication 6, dans lequel lesdites informations d'état comprennent un message destiné à notifier le serveur mandataire que le navigateur a cessé d'envoyer des messages à l'aide dudit identificateur de connexion.

9. Procédé selon la revendication 8, dans lequel le serveur mandataire désalloue de la mémoire attribuée pour la session après avoir été informé que le navigateur cesse d'envoyer des messages à l'aide dudit identificateur de connexion.

10. Procédé selon la revendication 1, dans lequel lesdites informations d'état sont transmises soit dans une demande originale de document entre le navigateur de dispositif mobile et le serveur mandataire, soit au commencement d'une session de navigation entre le navigateur de dispositif mobile et le serveur mandataire, et sont périodiquement mises à jour tout au long de la session de navigation.

11. Procédé selon la revendication 10, dans lequel ladite session de navigation est conforme à un protocole de communication hors bande.

12. Système de commande de la remise d'un contenu en parties multiples entre un serveur d'origine et un navigateur de dispositif mobile, via un serveur mandataire, comprenant :
un moyen destiné à recevoir des informations d'état en provenance du navigateur de dispositif mobile comprenant des informations intéressant des parties demandées dudit contenu en parties multiples, les informations d'état comprenant des valeurs de hachage pour les parties demandées dudit contenu en parties multiples, les informations d'état comprenant une valeur de hachage pour une URL d'une partie demandée qui est mise en mémoire cache dans le navigateur de dispositif mobile et une valeur de hachage de données de la partie demandée qui est mise en mémoire cache dans le navigateur de dispositif mobile ;
un moyen destiné à obtenir des données dudit serveur d'origine par ledit serveur mandataire ;
un moyen destiné à produire une valeur de hachage pour une URL d'une partie obtenue et une valeur de hachage de données de la partie obtenue ;
un moyen destiné à comparer les hachages de l'URL et des données de la partie obtenue avec les hachages de l'URL et des données de la partie demandée qui sont mis en mémoire cache dans le navigateur de dispositif mobile, respectivement ; et
un moyen destiné à créer un document en parties multiples pour sa transmission vers ledit navigateur de dispositif mobile, ledit document en parties multiples comprenant des versions comprimées desdites parties demandées ainsi que des informations destinées à indiquer des parties déjà mises en mémoire cache dans ledit navigateur de dispositif mobile et des parties qui ne sont pas encore mises en mémoire cache dans ledit navigateur de dispositif mobile.
